# EUROPÄISCHE PATENTSCHRIFT

(11) **EP 0 843 809 B1**
(45) Veröffentlichungstag und Bekanntmachung des Hinweises auf die Patenterteilung: **12.02.2003**
(21) Anmeldenummer: 96927661.7
(22) Anmeldetag: 02.08.1996
(51) Int. Cl.: G01C 19/56

(54) **MIKROMECHANISCHER DREHRATENSENSOR (DRS)**
MICROMECHANICAL GYROMETER
GYROMETRE MICROMECANIQUE

(30) Priorität: 08.08.1995 DE 19528961
(43) Veröffentlichungstag der Anmeldung: 27.05.1998
(73) Patentinhaber: EADS Deutschland GmbH, 85521 Ottobrunn (DE)
(72) Erfinder: VOSS, Ralf, D-82319 Starnberg (DE); BAUER, Karin, D-81479 München (DE); ROSE, Matthias, D-85604 Zorneding (DE); STENZEL, Erwin, D-82041 Deisenhofen (DE); SCHALK, Josef, D-84051 Altheim (DE); KUPKE, Winfried, D-85521 Ottobrunn (DE); SEIDEL, Helmut, D-82319 Starnberg (DE)
(86) Internationale Anmeldenummer: EP9603412
(87) Internationale Veröffentlichungsnummer: WO97006412

(56) Entgegenhaltungen:
- EP-A- 0 572 976
- DE-A- 4 228 795

## Beschreibung

Die Erfindung betrifft einen mikromechanischen Drehratensensor, bei dem Teile aus Silizium, Siliziumverbindungen oder Silizium/Glasverbindungen oder anderen Halbleitermaterialien mit Techniken der Mikromechanik herausstrukturiert sind.

Die Anwendungsgebiete solcher Drehratensensoren sind sehr vielfältig. So können im Bereich der Kraftfahrzeugtechnik die Gier-, Nick-, und Rollgeschwindigkeit als Schlüsselgröße für Fahrdynamikregelungssysteme (ABS, ADS, ASS, ASR, u.a.), für Navigationssysteme als Ergänzung zum GPS sowie für die Messung der Winkelgeschwindigkeit bewegter Teile eines Kfz zueinander bestimmt werden. In der Raumfahrt können solche Systeme als gewichtund platzsparende Inertialkomponenten (Trägheitsplattform), zur Stabilisierung der Fokalebene optischer Beobachtungsinstrumente von Satelliten und zur Messung und Stabilisierung von (ungedämpften) Schwingungen elastischer Komponenten Verwendung finden.

Bei der Luftfahrt kann die Messung und Regelung der relativen Bewegung verschiedener Flugzeugkomponenten zueinander (adaptiver Flügel) erfolgen; ferner besteht Verwendungsmöglichkeit bei der Bahnstabilisierung und Navigation von Flugkörpern.

Bei der Bahntechnik kann Gier- und Rollwinkel der Wagen mit Einzelradaufhängung (vgl. Pendolino), also der Istwert zur Regelung der optimalen Kurveneinfahrtsgeschwindigkeit gemessen werden.

In der Automatisierungstechnik können Roboterbewegungen überwacht sowie Roboterkomponenten gesteuert werden.

Im allgemeinen Maschinenbau sind solche Komponenten für die Vibrationsmessung (evtl. Active Vibration Control), besonders für die Messung derjenigen Komponente der Impedanz schwingender elastischer Strukturen, die von dem "Drehanteil" der Bewegung herrührt, nützlich. Hier ist besonders die Miniaturisierung (geringes Gewicht und geringer Platzbedarf) entscheidend.

Schließlich finden sich beispielsweise in der Medizintechnik Anwendungsmöglichkeiten so zu Beispiel beim Monitoring von Patienten durch Messung deren Bewegungen, bei der Steuerung von chirurgischen Instrumenten (minimal invasive Chirurgie) und der Steuerung von Rollstühlen

Die zahlreichen Anwendungsmöglichkeiten haben bereits zu zahlreichen Vorschlägen für Drehratensensoren geführt.

Verschiedene Prinzipien zur Messung der Drehrate wurden inzwischen auch miniaturisiert, um kostengünstig gefertigt zu werden und um für Anwendungen in Videokameras, Fahrzeugen oder anderen bewegten Objekten in Frage zu kommen. Es sind bereits Realisierungen in Metall mit piezoelektrischer Aktorik und Sensorik, in Quarz, in kristallinem Silizium und in Polysilizium bekannt.

So sind in DE 42 28 795 A1 (Bosch), EP 05 72 976 A1 (Canon), WO 93/14409 (Sunstrand) Systeme beschrieben, bei denen einer oder mehrere Beschleunigungssensoren (BS) auf schwingenden Strukturen angebracht sind, und die bei einer Drehung des Systems resultierende Coriolisbeschleunigung messen. Als Nachteil ist dabei zu sehen, daß die Starrheit der Struktur, auf der sich die beiden Sensoren befinden, nicht oder sehr schwierig zu gewährleisten ist. Ferner ist das Übersprechen der Anregungsbewegung auf die Sensorkomponente nicht auszuschalten, insbesondere dann nicht, wenn man nur jeweils einen BS für jede Richtung verwendet.

Die Druckschriften DE 35 09 948 A1 (Draper) und EP 0 422 280 A2 (Draper) beschreiben Drehratensensoren, deren Geometrie an eine miniaturisierte, kardanische Aufhängung (Gimbal) angelehnt ist. Wird das Gesamtsystem um eine geeignete Achse gedreht, so koppelt eine Drehschwingung um die Aufhängung des äußeren Rahmens an eine Drehschwingung um die Aufhängung des inneren Rahmens (und/oder umgekehrt). Hier ist als Nachteil zu sehen, daß die angegebene dreidimensionale Geometrie zur optimalen Sensorfunktion die Erzeugung mechanisch spannungsfreier Strukturen bzw. Strukturen mit definierten Verspannungen erfordert, was sehr schwierig zu realisieren ist. Zur Erzielung eines ausreichend großen Meßeffekts ist eine besondere Anordnung der trägen Masse auf dem Sensor notwendig, diese muß symmetrisch zu einer Achse senkrecht zur Waferebene auf der kardanischen Struktur angeordnet sein. Die technologische Realisierung eines solchen Aufbaus ist sehr problematisch, d.h. die Herstellung der Sensoren im Batchprozess mit dem Ziel großer Stückzahlen ist sehr kostenintensiv.

Aus WO 93/05400 (BEI-Electronics) ist ein elektrostatisch bzw. elektromagnetisch angeregter Drehratensensor bekannt, der aus einer Scheibe besteht, welche in der Waferebene kleine periodische Drehbewegungen ausrührt. Eine Drehung des Systems um eine Achse parallel zur Waferebene verursacht eine Verkippung der Scheibe bezüglich ihrer Bewegungsebene. Diese Verkippung wird durch piezoresistive Sensoren in den vier elastischen Aufhängungen der Scheibe gemessen. Die Nachteile liegen darin, daß dieser Sensor nur unter großen Aurwand mechanisch spannungsfrei herzustellen ist und daß die Verkippung der Scheibe in einem gedrehten Koordinatensystem bewirkt, daß die Regelung der kapazitiven Anregung der periodischen Drehbewegung der Scheibe sehr aufwendig wird.

Die Druckschrift EP 0 519 404 A1(Honda) beschreibt einen Gasfluß-Sensor im Anemometerprinzip, bei dem der Effekt einer Drehrate über die Änderung des Differentialwiderstandes eines Leiterpaares gemessen wird. Dieses Leiterpaar befindet sich in der Wand eines gasdurchflossenen Si-Röhrchens und mißt die Richtungsänderung des Gasflusses aufgrund der Corioliskraft. Die Nachteile sind hier darin zu sehen, daß das System für die Versorgung und Regelung des Gases zusätzlich Aktorik (z.B. Ventile und/oder Pumpen) sowie weitere Peripherie für die Gasbevorratung und -zuleitung etc. benötigt. Das Vorhandensein dieser Komponenten wird in diesem Patent vorausgesetzt. Ferner ist durch den Einsatz eines Gases eine hohe Temperaturempfindlichkeit zu erwarten.

Zu den bereits miniaturisierten Geometrien und Funktionsweisen gehören auch verschiedene Arten von Stimmgabelsensoren zur Messung der Drehrate. Sie sind beispielsweise aus: EP 0 574 143 A1 (Lucas), WO 93/05401 (Draper) , DE 40 22 485 A1, WP 92/01941 (Bosch) DE 42 28 795 A1 und DE 40 41 582 A1(Bosch) bekannt. Bei sämtlichen darin beschriebenen Stimmgabelsensoren werden die Zinken zu Schwingungen **parallel** zur Waferebene angeregt. Bringt man das Sensorsystem in ein gedrehtes Koordinatensystem, so bewirkt das eine Biegung der Zinken in einer Ebene senkrecht zur Anregungsrichtung und/oder eine Torsion der Zinkenaufhängung.

Bei den Schriften WO 93/05401 (Draper), DE 40 22 485 A1, WP 92/01941 (Bosch) und DE 40 41 582 A1(Bosch) handelt es sich um doppelt (beidseitig) aufgehängte Stimmgabelsensoren. Man muß daher erwarten, daß diese Sensoren eine erhebliche Temperaturempfindlichkeit aufweisen. Die in den meisten Ausführungsbeispielen vorgeschlagene elektrostatische Anregung der Zinken sowie die Auslesung des Signals implizieren Nichtlinearitäten, die zur einem erheblichen Regelungsaufwand führen. Bei den Ausführungsbeipielen aus WO 93/05401 ist zusätzlich eine mechanisch spannungsfreie Strukturierung problematisch.

Ein einseitig aufgehängter Stimmgabelsensor mit piezoresistiver Auslesung der Torsion der Stimmgabelaufhängung ist aus EP 0574 143 A1 (Lucas) bekannt. Die Stimmgabel wird elektrostatisch über eine Interdigitalstruktur zu Schwingungen in der Waferebene angeregt. Aufgrund der geringen Strukturtiefe des Sensorelementes (senkrecht zur Waferebene) ist es hier problematisch die Steifigkeit der Stimmgabelbasis und der Zinken in dieser Richtung zu gewährleisten. Diese Steifigkeit ist aber notwendig, um eine Signalauslesung der Drehrate über die Torsion der Stimmgabelaufhängung zu realisieren.

Es ist das Ziel der Erfindung, ein miniaturisiertes und preiswert in Massenherstellung zu fertigendes System zu schaffen, das zur Messung der Drehrate (Winkelgeschwindigkeit) bewegter Körper in allen Bereichen der Technik verwendet werden kann.

Diese Aufgabe wird durch die Merkmale gemäß dem kennzeichnenden Teil des Hauptanspruches gelöst.

Durch die erfindungsgemäße Lösung ergeben sich insbesondere folgende Vorteile:

Die Miniaturisierung kann stark vorangetrieben werden, da die Lösung robust gegen Schock durch geringe Masse und symmetrischen Aufbau und kostensparend, gewichtsparend, platzsparend und energiesparend ist;

Das Herstellungsverfahren erlaubt über Batchprozesse hohe Stückzahlen und gute Reproduzierbarkeit und ist kostengünstig. Durch die CMOS-kompatible Herstellung, ist auch die Voraussetzung für die monolithische Integrierbarkeit mit der Sensorelektronik oder Teilen davon sowie anderen geeigneten mikromechanischen Komponenten gewährleistet.

Die monolithische Integrierbarkeit mit der Sensorelektronik oder mit Teilen von dieser zu einem robusten, preiswerten Drehratensensor z.B. mit Beschleunigungssensoren zu Mikroinertialkomponenten ist besonders vorteilhaft.

Weitere spezielle Vorteile der vorgeschlagenen Sensorgeometrie und des entsprechenden Sensorherstellungsverfahrens für die Zinken in der Waferebene sind in der Designfreiheit der Zinken, in genügend Fläche für die Aktorik (z.B. piezoelektrische Aktorik, kapazitive Aktorik, etc., s.u.), in präziser Fertigung der Zinkengeometrie in der Waferebene durch Verwendung von photolithographischen Verfahren, im hochgenauen Einstellen der Zinkendicke durch die Nutzung von vergrabenen Ätzstoppschichten unter Verwendung von SiliconOnInsulator-Material (hergestellt z.B. durch bekannte **BESOI-** oder SIMOX-Verfahren) und in der Trimmbarkeit auf der Zinkenfläche su sehen.

Durch die Ankopplung an die Torsion der Stimmgabelaufhängung ist die Anregungsbewegung von der Auslesebewegung getrennt.

Als Vorteile im Vergleich zu Metall- und Quarzsensoren ist zu nennen, daß die notwendige, hybride Integration der Quarzkomponente mit der Elektronik kein so hohes Kostenreduzierungspotential in der Herstellung wie die Siliziumsensoren erlaubt.

Weitere Einzelheiten der Erfindung ergeben sich aus der Beschreibung, in der anhand der Zeichnung mehrere Ausführungsbeispiele erörtert sind. Es zeigen:
- Fig. 1a-c: eine dreidimensionale Darstellung des ersten Ausführungsbeispiels, und zwar
a) die Prinzipdarstellung
b) die Darstellung der Anregungsmode und
c) die Darstellung der Auslesungs- oder Torsionsmode
- Fig. 2: eine schematische Darstellung des Querschnitts des ersten Ausführungsbeispiels in der Variante A
- Fig.3: eine schematische Aufsicht auf den Gegenstand der Erfindung,
- Fig.4: einen schematischen Querschnitt A-A' durch den Gegenstand von Fig. 3,
- Fig.5: schematisch den Querschnitt des ersten Ausführungsbeispiels in der Variante B
- Fig.6: ein Blockschaltbild zur Auswertung des ersten Ausführungsbeispiels
- Fig. 7 a-c: Konstruktive Varianten für die Geometrie zur Optimierung der Abstimmung und zwar
a) U-Profil
b) Hohlprofil des Torsionsbalkens
c) Zinken mit Trimmasse
- Fig. 8 a-b: Varianten für die Bildung von Differenzsignalen und zwar
a) entgegengesetzte Anordnung in zwei Ätzgruben und
b) entgegengesetzte Anordnung in einer Ätzgrube
- Fig. 9. a-e:: Varianten für die Anregung, und zwar
a) Thermomechanisch (Formgedächtnis: analoger Aufbau),
b) Magnetostriktiv,
c) Elektrostatisch,
d) Elektromagnetisch im homogenen B-Feld und
e) Elektromagnetisch im inhomogenen B-Feld
- Fig. 10 a-c: Varianten für den Auslesemechanismus, und zwar
a) Elektrostatisch,
b) Optisch (Interferometer) und
c) Piezoelektrisch.
- Fig. 11 a-d: Varianten für die monolithische Integration (insb. DRS und BS mit der empfindlichen Richtung senkrecht zur Waferoberfläche) und zwar
a) Drehratensensor mit Signverarbeitungselektronik,
b) zwei Drehratensensoren für unterschiedliche Achsen,
c) ein Drehratensensor und ein Beschleunigungssensor und
d) zwei Drehratensensoren und zwei Beschleunigungssensoren.

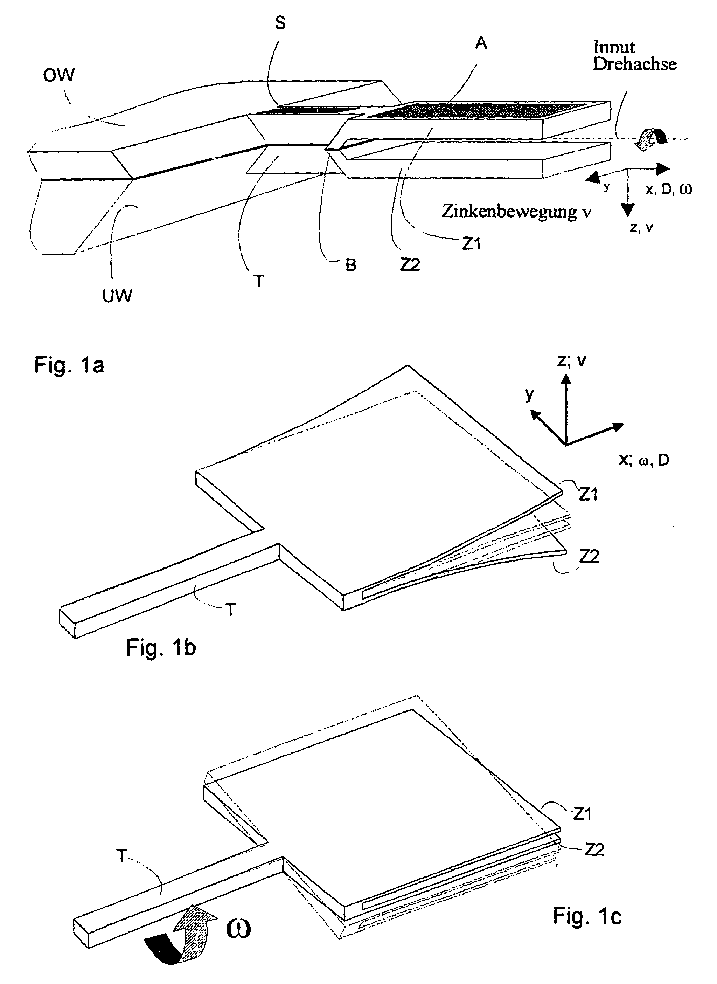

Zunächst wird das Funktionsprinzip anhand der Figur 1 beschrieben.

Eine Möglichkeit zur Messung der Winkelgeschwindigkeit (Drehrate), die im folgenden anhand der vorliegenden Sensorkonfiguration näher beschrieben wird, besteht in der Ausnutzung des Corioliseffekts. In den Figuren 1a-c ist die Geometrie des Sensors dargestellt und das zugrundeliegende Funktionsprinzip in stark vereinfachter Form veranschaulicht.

Der Sensor besteht aus einer Stimmgabel S mit Doppelzinken Z1 und Z2, deren Fußpunkt, die Basis B, an einem Torsionsbalken T hängt, der selber wiederum in einer massiven Supportstruktur mündet, die vom oberen Wafer OW und dem unteren Wafer UW gebildet wird. Auf dem oberen Zinken Z1 der Stimmgabel S ist eine Aktorschicht bzw. ein Aktorelement A zur Zinkenanregung aufgebracht. Der Torsionsbalken T trägt eine sensitive Schicht S zur Signalerfassung, d.h. zur Torsionsmessung.

Grundvoraussetzung zur Ausnutzung des Corioliseffekts ist die Anregung einer Stimmgabelschwingung. Die entsprechende Anregungs- oder auch Stimmgabelmode ist schematisch in Fig.lb dargestellt. Bringt man den derart schwingenden Sensor in ein System, das sich um die Längsachse des Torsionsbalkens (x-Achse) mit einer Drehgeschwindigkeit ω dreht, so wirkt aufgrund der gegenphasigen Schwingung der Zinken Z1 und Z2, die senkrecht zur Waferoberfläche (x-y-Ebene) erfolgt, ein Drehmoment **D** um die x-Achse auf die Struktur. Dieses periodische Drehmoment führt zu einer Drehschwingung des Torsionsbalkens T. Die entsprechende Torsions- oder auch Auslesungsmode ist in Fig. 1c dargestellt. Die Amplitude der Drehschwingung ist der zu messenden Drehrate und der Schnelle v der Zinken direkt proportional.

Eine von vielen Möglichkeiten zur Bestimmung der Drehrate ω besteht, wie in Figur 1a angedeutet, in der piezoresistiven Messung der durch die Drehschwingung im Torsionsbalken induzierten, mechanischen Schubspannungen. Um ein möglichst großes Meßsignal zu erhalten, müssen die Eigenfrequenzen der Anregungs- und der Auslesungsmode im Rahmen einer geometrischen Optimierung aufeinander abgestimmt werden. Die Anregung selbst sollte möglichst in Resonanz erfolgen. Die Güte ( Q-Faktor) der Auslesungsmode sollte aus Gründen der Signalmaximierung möglichst hoch sein. Die Drehrichtung kann aus der Phasenlage der Torsionsschwingung bestimmt werden.

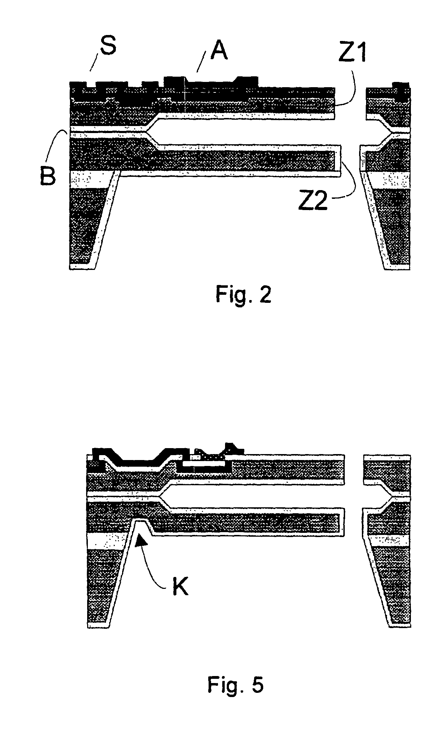

Im Folgenden wird ein erstes Ausführungsbeispiel in zwei Varianten beschrieben. Die beiden Varianten unterscheiden sich dadurch, daß in der ersten Variante A die Dicke der Stimmgabelaufhängung gleich der Dicke der Stimmgabel-Struktur ist. (Fig. 1-4).

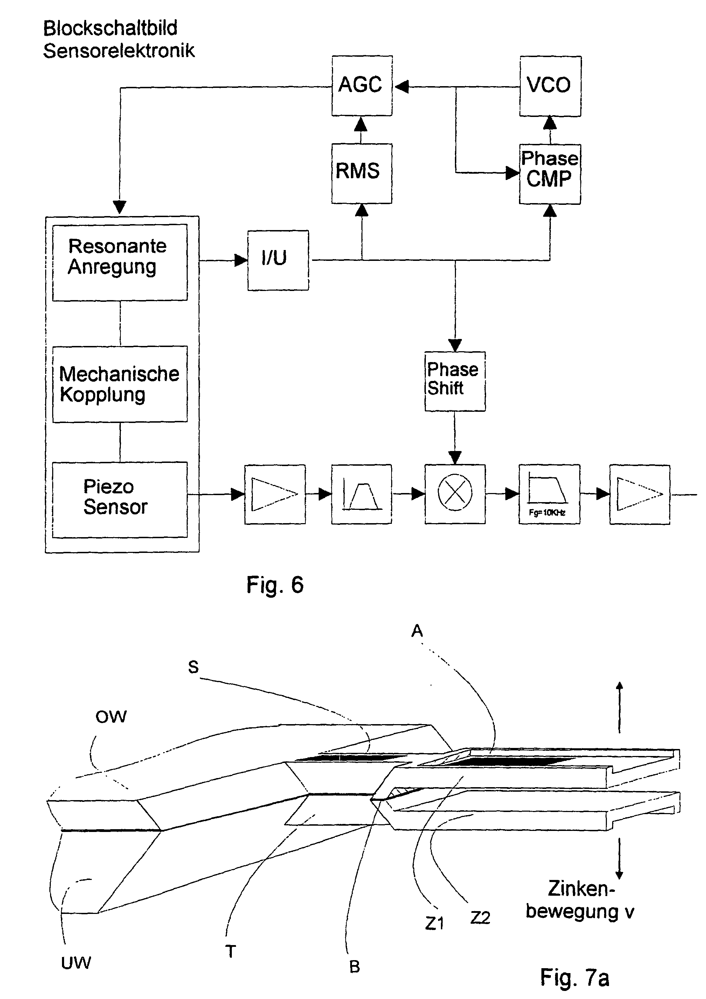

Bei der Variante B hingegen ist die Dicke der Stimmgabelaufhängung kleiner als die Dicke der Stimmgabel-Struktur, d.h. es erfolgt eine Einkerbung des Torsionsbalkens T (Fig. 5).

### Gemeinsame Merkmale sind:

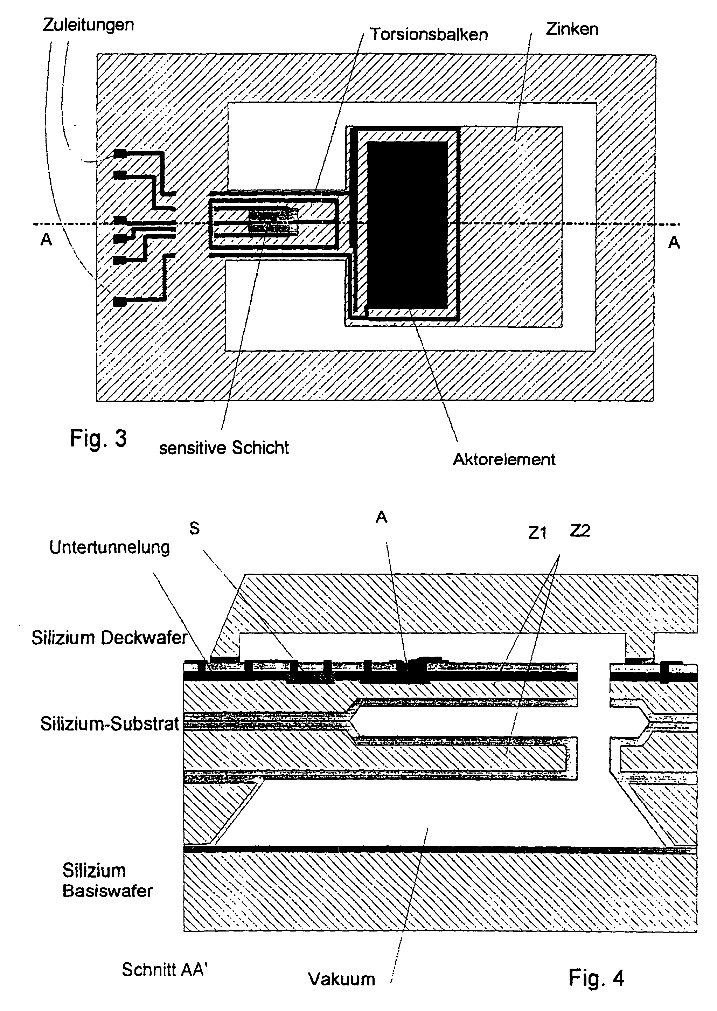

Die Stimmgabel (Sensormittelteil) besteht aus zwei Si-Wafern. Der Aufbau ist aus Basis- und Deckwafer (aus Silizium und/oder Glas) gestapelt und so an das Mittelteil gebondet, daß die Sensorkavität evakuiert werden kann (Fig.4). Der Bondrahmen ist durch ein geeignetes Dotierprofil im Bondrahmenbereich vakuumdicht elektrisch untertunnelt (Fig.4). Die Anregung **eines** Zinkens erfolgt über eine piezoelektrische Dünnschicht A z.B. aus AIN, ZnO₂, PZT o.ä. (Fig.1-4). Die piezoelektrische Dünnschicht A ist unten über dotiertes Silizium (Fig.4) oder eine elektrisch leitende Dünnschicht, oben über eine elektrisch leitende Dünnschicht kontaktiert. Die Auslesung der Schubspannung auf der Oberfläche des Torsionsbalkens T (bzw. der Aufhängung der Stimmgabel) erfolgt piezoresistiv; dazu ist eine vierseitige Kontaktierung des Piezowiderstandes notwendig (Fig.3). Insgesamt arbeitet das System als resonantes Aktor-Sensor-System (Fig.1).

Gemeinsam für Variante A und B gilt:

Es werden Herstellungsmethoden verwendet, die in der Halbleiterindustrie üblich und Stand der Technik sind, erweitert durch spezielle, mikromechanische Prozeßschritte auf der Basis von photolithographischer Vollwaferprozessierung im Batchprozeß.

Als Ausgangsmaterial werden zwei Siliziumwafer ggf. mit vergrabenen Dünnschichten verwendet, die für einen Ätzstopp beim naßchemischen, anisotropen Ätzen geeignet sind. Vorzugsweise kommt einkristallines Silizium (evt. auch Poly-Silizium) genannt SOI, mit frei wählbarer, jedoch symmetrischer Dicke in allen Dotierungstypen und Dotierkonzentrationen, vorzugsweise (100)-Silizum, zur Anwendung.

Fig. 6 zeigt anhand eines Blockschaltbildes ein gemäß der Erfindung vorgeschlagenes Ausleseprinzip für die Kombination der piezoelektrischen Anregung und der piezoresistiven Auslesung.

Damit eine resonante Anregung mit konstanter Amplitude der Zinken Z1 und Z2 erreicht wird, muß der Phasenunterschied zwischen Strom und Spannung bei kompensierter Eigenkapazität sowie Streukapazität der piezoelektrischen Schicht gleich 0° sein. Dieses kann z.B. durch einen Phasenkomperator mit Frequenznachführung eines spannungsgesteuerten Oszillators (VCO) erzielt werden. Eine zweite Möglichkeit besteht in der Schaltung in den Rückkoppelzweig in einem schwingungsfähigen System. Die Amplitudenstabilität der Zinken Z1 und Z2 wird durch Nachführen der Piezospannung in Abhängigkeit des Piezostroms gewährleistet. Das Ausgangssignal des piezoresistiven Sensors wird nach einer Vorverstärkung und einer Bandpaßfilterung mit dem um 90° phasenverschobenen Anregungssignal der Zinken multipliziert. Durch die phasensynchrone Gleichrichtung ist es möglich, das mechanische Übersprechen des Sensor zu vermindern. Dem Multiplizierer ist ein Tiefpaß zur Bandbegrenzung nachgeschaltet. Bei Bedarf ist es möglich, den Sensor als gefesselte Version auszulegen. Damit können Empfindlichkeit und Auflösung erhöht werden.

Im folgenden werden weitere Varianten für den Gegenstand der Erfindung vorgeschlagen.

Was das Ausgangsmaterial betrifft, so können die verwendeten Siliziumwafer auch durch epitaktisches Aufwachsen von Silizium ergänzt sein. Alternativ zu den angebenen Materialien können auch vergrabene p/n- Übergänge für den 'elektrochemischen Ätzstopp' verwendet werden;

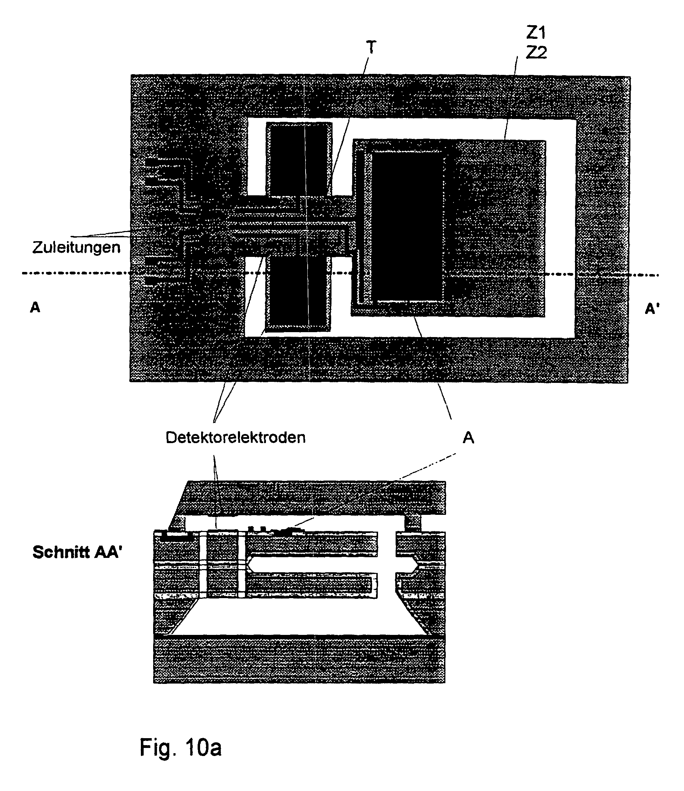

Bezüglich der Geometrie können alternativ zum beschriebenen plattenförmigrechteckigen Aufbau der Zinken auch zusätzlich Flügelstrukturen oder Ausleger zur gezielten Dämpfung oder zu elektrostatischer Anregung/Auslesung verwendet werden wie es z.B. in Fig.10a dargestellt ist.

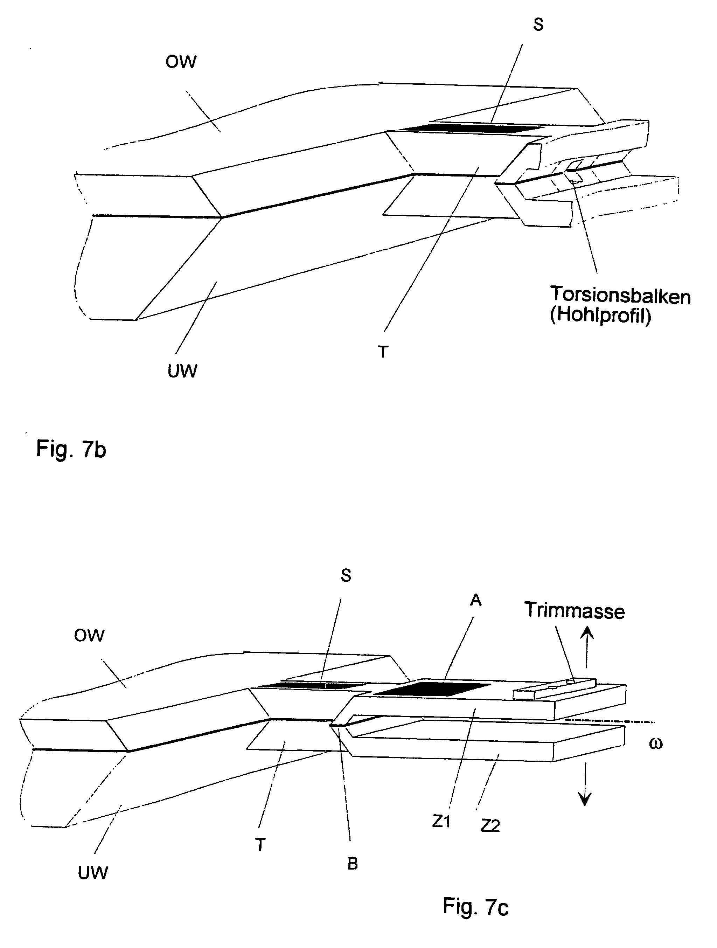

Ferner können weitere konstruktive Maßnahmen zur Festlegung oder Veränderung der Frequenzen und Modenformen des Torsionsbalkens und der Zinken entsprechend Fig. 7. a-c getroffen werden, und zwar bezüglich der Geometrie der Zinken und des Torsionsbalkens oder abweichend von der rechteckigen Form in der Waferebene, z.B. in gabelförmiger Geometrie.

So können die Zinken auch mit einem vorgegebenen Profil wie z.B. einem U-Profil nach Figur 7a, mit einem Hohlprofil, einem H-Profil oder dergleichen ausgebildet werden.

Ferner kann der Querschnitt des Torsionsbalkens T beispielsweise, wie in Figur 7f dargestellt, als Hohlprofil ausgebildet sein. Auch die Geometrie, insbesondere die Länge, der Stimmgabelbasis kann an die gegebenen Materialeigenschaften angepaßt werden. Ferner kann ein Stimmgabelzinken entsprechend Figur 7c mit einer Masse M zur späteren Trimmung versehen werden.

Das mechanische Übersprechen kann durch die geeignete Plazierung des piezoresistiven Elementes auf dem Torsionsbalken minimiert werden. Darüberhinaus kann durch das Aufbringen eines oder mehrerer Piezowiderstände, die den longitudinalen oder transversalen PR-Effekt zur Messung der Biegespannung in der Aufhängung der Stimmgabel nutzen, das mechanische Übersprechen gemessen werden.

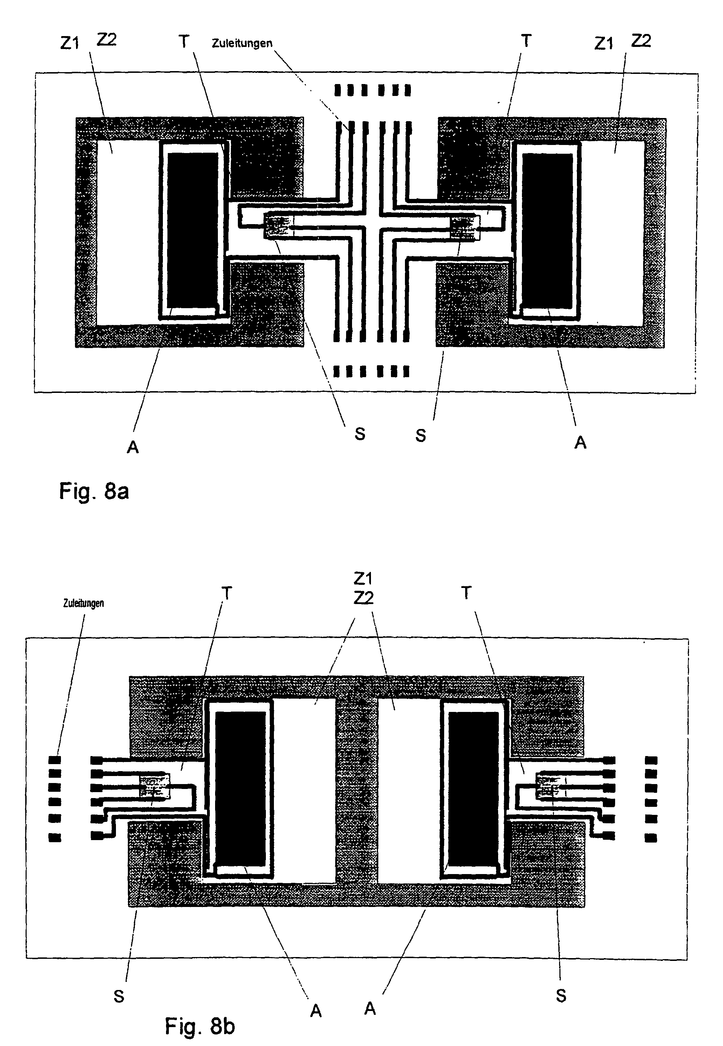

Schließlich können mehrere Sensorelemente zur Bildung von Differenzsignalen, z.B. einem Offsetsignal, verwendet werden, wie den Figuren.8a und 8b zu entnehmen ist.

Auch für die Anregungs- und Auslesemechanismen sind verschieden Varianten möglich.

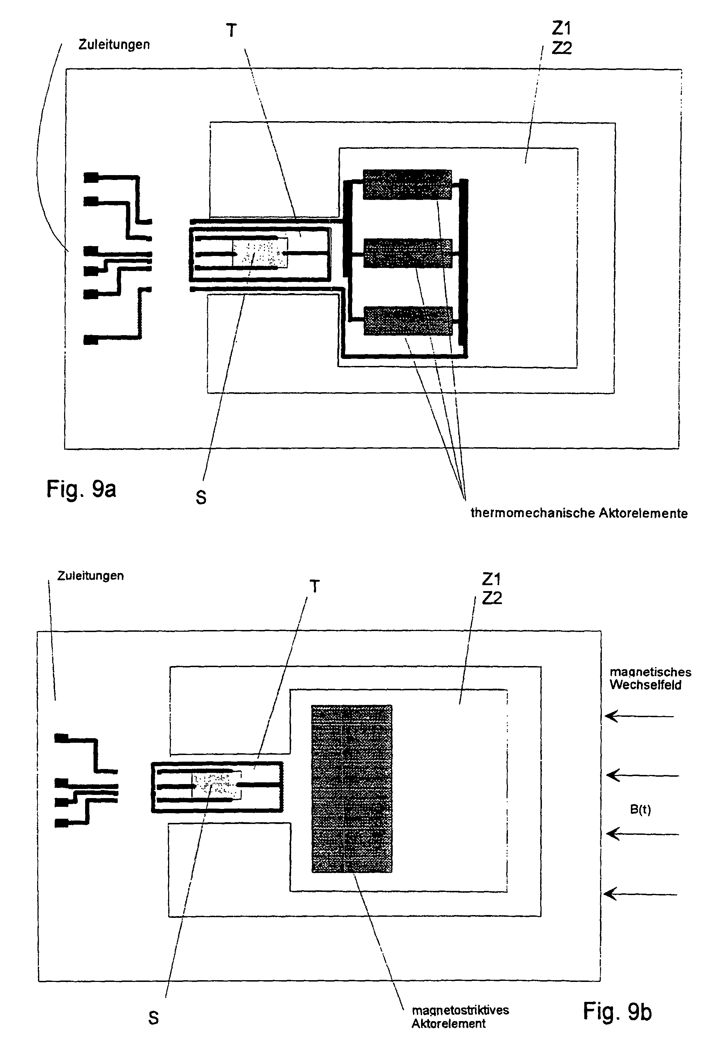

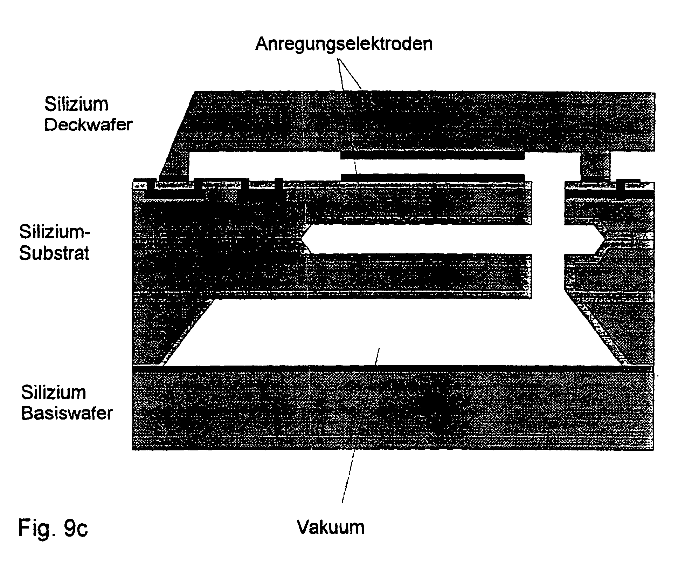

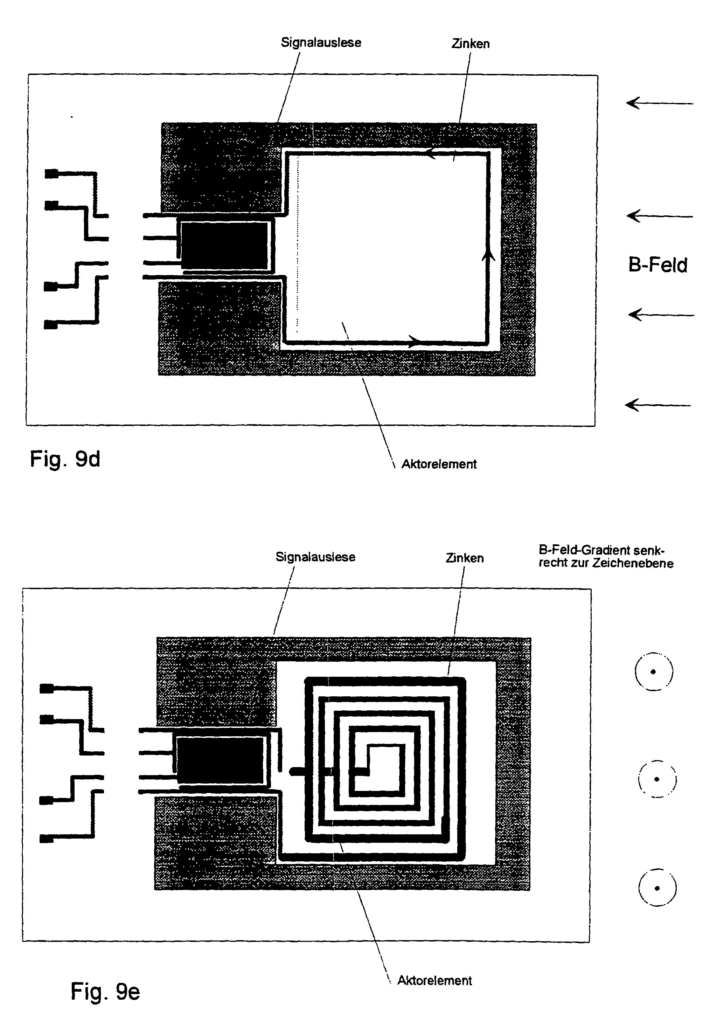

Nach Fig. 9a kann thermomechanische Anregung über implantierte Widerstände oder Dünnschichtwiderstände erfolgen. In Figur 9b ist eine magnetische Anregung über eine magnetostriktive Dünnschicht TbFe,SmFe, (TbDy)Fe dargestellt. Auch elektrostatische Anregung nach Fig. 9c mit Anregungselektroden ist möglich. In Figur 9d ist elektromagnetische Anregung z.B. über eine Leiterschleife im homogenen Magnetfeld und in Figur 9e z.B. über eine Spule im inhomogenen Magnetfeld parallel zur Zinkenbewegung wiedergegeben. Schließlich können auch Formgedächtnismaterialien in einer Anordnung wie nach Figur 9a zur Anwendung kommen.

Ferner können alle verwendeten Aktor-Dünnschichten jeweils auf einem oder beiden Zinken der Stimmgabel aufgebracht sein.

Auch bei der Auslesung sind mehrere Ausführungsformen möglich, die in den Figuren 10a-d vorgestellt werden.

So kann die Auslesung nach Fig. 10a elektrostatisch erfolgen. Dabei sind zusätzliche "Flügelflächen" sinnvoll.

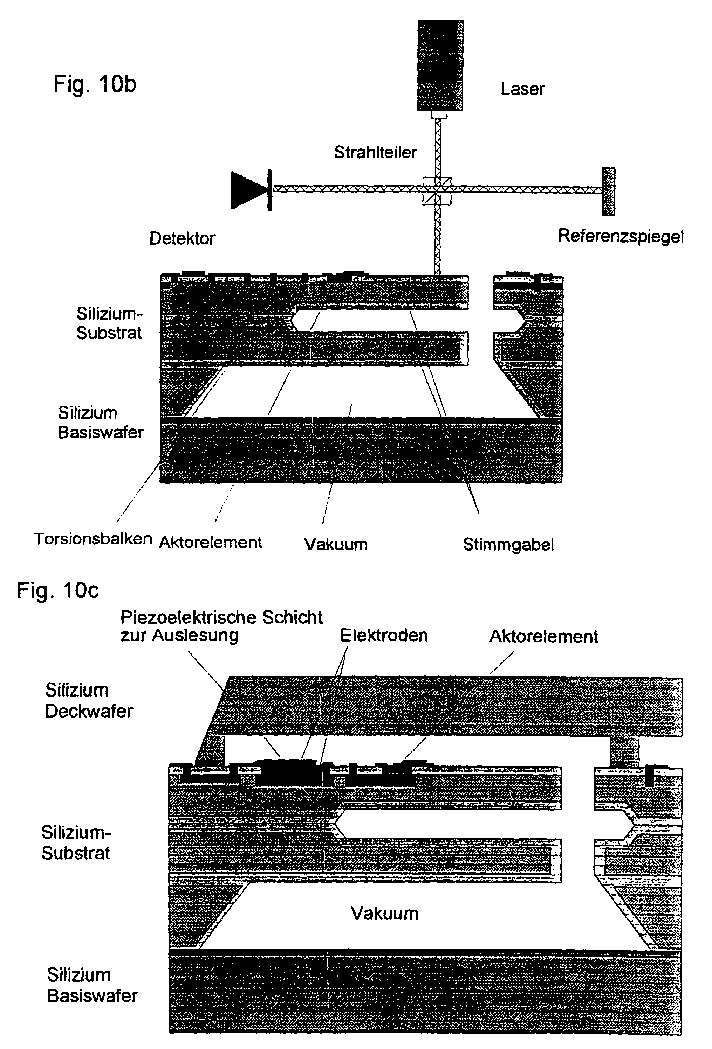

Ferner kann die Auslesung optisch, und zwar beispielsweise durch eine reflektierende Schicht und Strahlablenkungswinkel, oder durch eine Schicht, deren optische Eigenschaften von der mechanischen Spannung in der Schicht abhängen oder durch eine Schicht, die entsprechend Figur 10b Bestandteil eines Michelson-Interferometers ist, erfolgen.

Schließlich ist nach Figur 10c eine piezoelektrische Auslesung möglich.

Prinzipiell ist es möglich, jede der genannten Ausführungsformen auch als gefesselten Sensor auszulegen. Allgemein gilt bei der Fesselung, daß die Torsionsbewegung durch entgegenwirkende Kräfte kompensiert wird. Die Stellgröße ist dann proportional zur Meßgröße. Bei diesem Verfahren wird eine höhere Empfindlichkeit und Auflösung als bei nicht gefesselten Sensoren erzielt. Unmittelbar möglich ist diese Kraftkompensation bei der elektrostatischen (Fig. 10a) sowie bei der piezoelektrischen (Fig. 10b) Ausführungsform, da die beschriebenen sensitiven Elemente sofort auch als Stellelemente verwendet werden können. Bei den übrigen Ausführungsformen werden die benötigten Stellelemente entsprechend ergänzt.

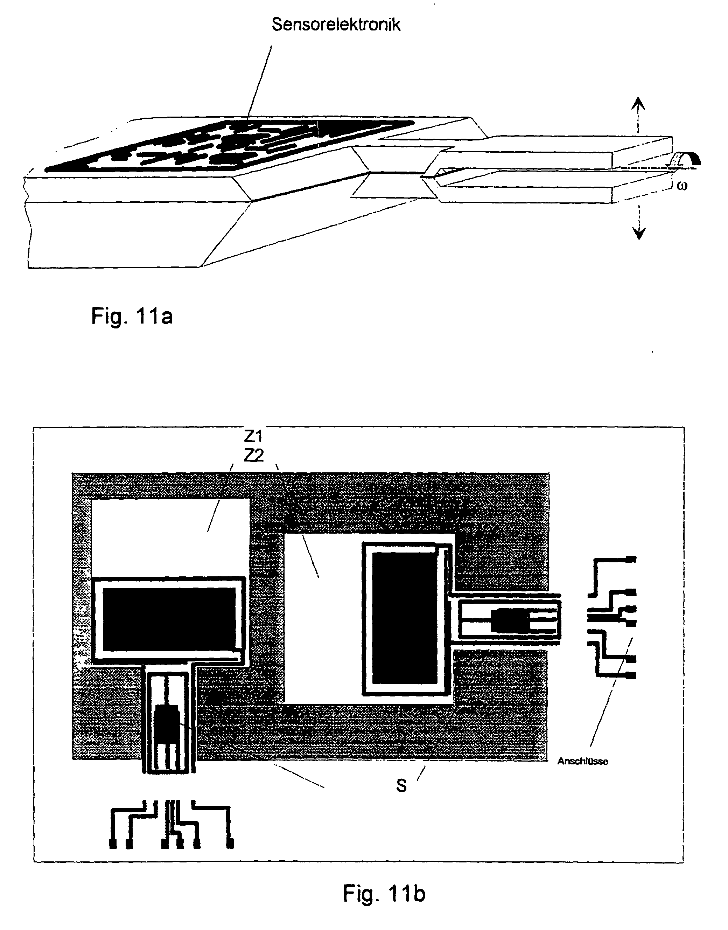

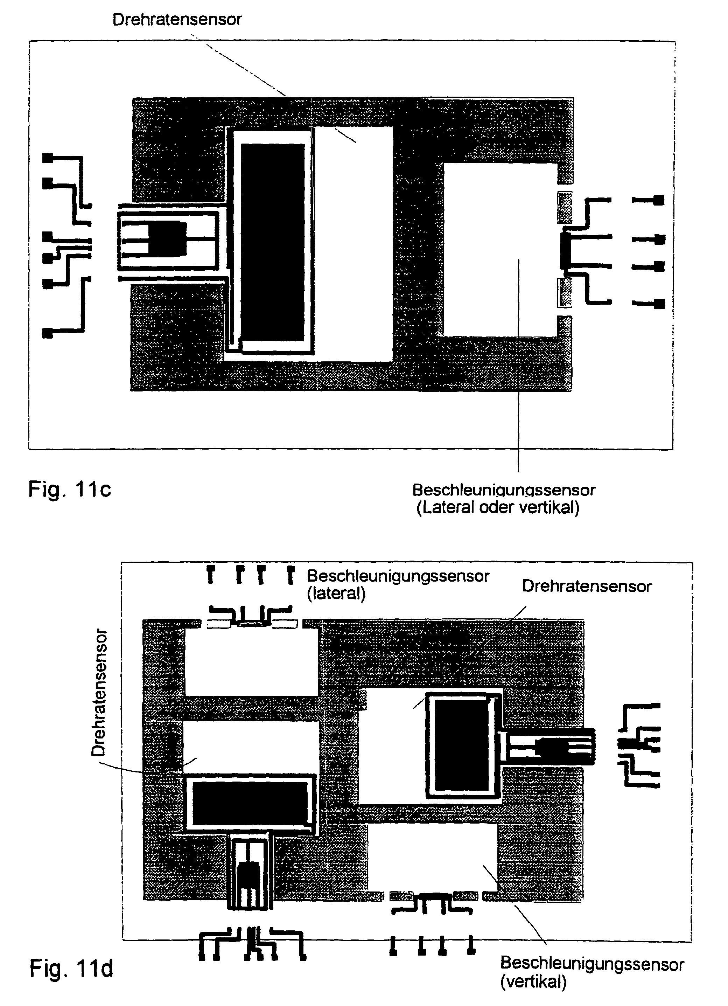

Anhand der Figuren 11 a-d sind verschiedene Integrationsvarianten vorgestellt.

So kann nach Figur 11a die Sensorelektronik oder Teile der Elektronik auf dem Chip zusammen mit dem Drehratensensor integriert sein. Bei der Ausführungsform nach Figur 11b sind mindestens zwei Drehratensensoren zur gleichzeitigen Messung mehrerer Komponenten der Winkelgeschwindigkeit integriert. Bei der weiteren Ausführungsform nach Fig. 11c sind ein DRS 1 und mindestens ein Beschleunigungssensor (BS) auf demselben Chip integriert. Dabei kann der BS mit sensitiver Richtung in Waferebene oder senkrecht zur Waferebene angeordnet sein. Ein derartiges integriertes Mikrosystem kann z.B. in einem Anti-Schleuder-System zur Messung der Gierrate und der Querbeschleunigung eingesetzt werden.

In Figur 11d besteht das Mikrosystem aus mindestens zwei DRS und mindestens zwei Beschleunigungssensoren sowie der dazugehörigen Elektronik zur präzisen Bestimmung der beiden Komponenten der Winkelgeschwindigkeit und der Beschleunigung in Waferebene sowie der Beschleunigung senkrecht dazu.

Durch Geometrieoptimierung werden die Eigenfrequenzen der Anregungs- und der Auslesungsmode so festgelegt, daß sie außerhalb des für das Anwendungsfeld des Sensors relevanten Störspektrums liegen. Im Rahmen einer frequenzselektiven Messung, nach dem Lockin-Prinzip, resultiert damit eine erhöhte Unempfindlichkeit gegenüber Querbeschleunigungen.

## Patentansprüche

1. Mikromechanischer Drehratensensor, bei dem Teile aus Silizium, Siliziumverbindungen oder Silizium/Glasverbindungen oder anderen Halbleitermaterialien mit Techniken der Mikromechanik herausstrukturiert sind, **dadurch gekennzeichnet,**
- **daß** der Drehratensensor die Form einer Stimmgabel (S) aufweist, die an Halbleiterwafern (OW, UW) durch eine Stimmgabelaufhängung befestigt ist, wobei Zinken (Z1, Z2) der Stimmgabel (S) in Ebenen parallel zu der Oberfläche der Halbleiterwafer (OW, UW) liegen,
- **daß** diese Zinken (Z1, Z2) in einer Ebene senkrecht zur Waferebene zu Schwingungen anregbar sind, und
- **daß** er ein Sensorelement (S) aufweist, das die Winkelgeschwindigkeit einer Drehung des Sensors um eine zur Stimmgabelaufhängung parallele Achse mißt.

2. Drehratensensor nach Anspruch 1, **dadurch gekennzeichnet, daß** das Sensorelement die Torsion der Stimmgabelaufhängung registriert.

3. Drehratensensor nach Anspruch 2, **dadurch gekennzeichnet, daß** das Sensorelement aus einkristallinem Si hergestellt ist.

4. Drehratensensor nach Anspruch 2, **dadurch gekennzeichnet, daß** das Sensorelement aus anderen mikromechanisch strukturierbaren Materialien wie z.B.: Poly-Si, SiC, Siliziumnitrid, Siliziumdioxid, GaAs, Quarz, AlN, PZT oder Metallen besteht.

5. Drehratensensor nach Anspruch 3 oder 4, **dadurch gekennzeichnet, daß** die Stimmgabel aus zwei Silizium-Wafern ggf. mit vergrabenen Dünnschichten besteht, die zwischen einem Basis- und einem Deckwafer liegen und daß die Teile so gebondet sind, daß die die Stimmgabel umgebende Kavität evakuierbar ist.

6. Drehratensensor nach einem der vorhergehenden Ansprüche, **dadurch gekennzeichnet, daß** die Anregung eines Zinkens der Stimmgabel über eine piezoelektrische Dünnschicht und die Auslesung der Schubspannung des Torsionsbalkens piezoresistiv erfolgt.

7. Drehratensensor nach einem der vorhergehenden Ansprüche, **dadurch gekennzeichnet, daß** der Querschnitt des Torsionsbalkens (T) als Hohlprofil ausgebildet ist.

8. Drehratensensor nach einem der vorhergehenden Ansprüche, **dadurch gekennzeichnet, daß** der Querschnitt wenigstens eines Zinkens (Z1) ein U-förmiges Profil aufweist.

9. Drehratensensor nach einem der vorhergehenden Ansprüche, **dadurch gekennzeichnet, daß** wenigstens ein Zinken (Z1) mit einer Trimmasse versehen ist.

10. Drehratensensor nach einem der vorhergehenden Ansprüche, **dadurch gekennzeichnet, daß** die Anregung eines Zinkens der Stimmgabel thermomechanisch über implantierte Heizwiderstände oder Dünnschichtheizwiderstände erfolgt.

11. Drehratensensor nach einem der vorhergehenden Ansprüche, **dadurch gekennzeichnet, daß** die Anregung eines Zinkens der Stimmgabel magnetisch über eine magnetostriktive Dünnschicht erfolgt.

12. Drehratensensor nach einem der vorhergehenden Ansprüche, **dadurch gekennzeichnet, daß** die Anregung eines Zinkens der Stimmgabel elektrostatisch mit Hilfe von Anregungselektroden erfolgt.

13. Drehratensensor nach einem der vorhergehenden Ansprüche, **dadurch gekennzeichnet, daß** die Anregung eines Zinkens der Stimmgabel elektromagnetisch über eine Leiterschleife in einem Magnetfeld erfolgt.

14. Drehratensensor nach einem der vorhergehenden Ansprüche, **dadurch gekennzeichnet, daß** die Auslesung der Schubspannung des Torsionsbalkens elektrostatisch erfolgt.

15. Drehratensensor nach einem der vorhergehenden Ansprüche, **dadurch gekennzeichnet, daß** die Auslesung der Schubspannung des Torsionsbalkens optisch über eine reflektierende Schicht und Ablenkung eines Strahls erfolgt.

16. Drehratensensor nach Anspruch 15, **dadurch gekennzeichnet, daß** die reflektierende Schicht Bestandteil eines Interferometers ist.

17. Drehratensensor nach einem der vorhergehenden Ansprüche, **dadurch gekennzeichnet, daß** die Auslesung der Schubspannung des Torsionsbalkens piezoelektrisch erfolgt.

18. Drehratensensor nach einem der vorhergehenden Ansprüche, **dadurch gekennzeichnet, daß** wenigstens Teile der Ansteuer- oder Ausleseelektronik auf dem Chip mit dem Drehratensensor integriert sind.

19. Drehratensensor nach einem der vorhergehenden Ansprüche, **dadurch gekennzeichnet, daß** er mit wenigstens einem weiteren Drehratensensor auf einem Chip integriert ist.

20. Drehratensensor nach einem der vorhergehenden Ansprüche, **dadurch gekennzeichnet, daß** er mit wenigstens einem Beschleunigungssensor (BS) auf einem Chip integriert ist.

21. Drehratensensor nach einem der vorhergehenden Ansprüche, **dadurch gekennzeichnet, daß** er mit wenigstens einem Beschleunigungssensor (BS) und einem Drehratensensor (DRS) auf einem Chip integriert ist.

22. Drehratensensor nach einem der vorhergehenden Ansprüche, **dadurch gekennzeichnet, daß** die Dicke der Stimmgabelaufhängung gleich der Dicke der Stimmgabel-Struktur ist.

23. Drehratensensor nach einem der vorhergehenden Ansprüche, **dadurch gekennzeichnet, daß** die Dicke der Stimmgabelaufhängung kleiner als die Dicke der Stimmgabel-Struktur ist.

24. Drehratensensor nach einem der vorhergehenden Ansprüche, **dadurch gekennzeichnet, daß** er bezüglich der Torsion als gefesselter Sensor ausgebildet ist.

## Claims

1. Micromechanical gyrometer, wherein elements are constructed from silicon, silicon compounds or silicon/glass compounds or other semi-conductor materials using micromechanical techniques, **characterised**
- **in that** the gyrometer is in the form of a tuning fork (S) which is fixed to semi-conductor wafers (OW, UW) by a tuning fork suspension, prongs (Z1, Z2) of the tuning fork (S) being located in planes parallel with the surface of the semi-conductor wafer (OW, UW),
- **in that** the prongs (Z1, Z2) can be excited to oscillate in a plane perpendicular to the wafer plane, and
- **in that** the gyrometer has a sensor element (S) which measures the angular velocity of rotation of the sensor about an axis parallel with the tuning fork suspension.

2. Gyrometer according to claim 1, **characterised in that** the sensor element registers the torsion of the tuning fork suspension.

3. Gyrometer according to claim 2, **characterised in that** the sensor element is produced from monocrystalline Si.

4. Gyrometer according to claim 2, **characterised in that** the sensor element comprises other micromechanically constructable materials, such as, for example: poly-Si, SiC, silicon nitride, silicon dioxide, GaAs, quartz, AlN, PZT or metals.

5. Gyrometer according to claim 3 or 4, **characterised in that** the tuning fork comprises two silicon wafers, optionally having embedded thin films, which are located between a base wafer and a top wafer, and **in that** the elements are bonded in such a manner that the cavity which surrounds the tuning fork can be evacuated.

6. Gyrometer according to any one of the preceding claims, **characterised in that** the excitation of a prong of the tuning fork is effected by means of a piezoelectric thin film and the read-out of the transverse stress of the torsion beam is effected in a piezoresistive manner.

7. Gyrometer according to any one of the preceding claims, **characterised in that** the cross-section of the torsion beam (T) is in the form of a hollow profile.

8. Gyrometer according to any one of the preceding claims, **characterised in that** the cross-section of at least one prong (Z1) has a U-shaped profile.

9. Gyrometer according to any one of the preceding claims, **characterised in that** at least one prong (Z1) is provided with a trimming weight.

10. Gyrometer according to any one of the preceding claims, **characterised in that** the excitation of a prong of the tuning fork is effected thermomechanically by means of implanted heat resistors or thin-film heat resistors.

11. Gyrometer according to any one of the preceding claims, **characterised in that** the excitation of a prong of the tuning fork is effected magnetically by means of a magnetostrictive thin film.

12. Gyrometer according to any one of the preceding claims, **characterised in that** the excitation of a prong of the tuning fork is effected electrostatically by means of excitation electrodes.

13. Gyrometer according to any one of the preceding claims, **characterised in that** the excitation of a prong of the tuning fork is effected electromagnetically by means of a conductor loop in a magnetic field.

14. Gyrometer according to any one of the preceding claims, **characterised in that** the read-out of the transverse stress of the torsion beam is effected electrostatically.

15. Gyrometer according to any one of the preceding claims, **characterised in that** the read-out of the transverse stress of the torsion beam is effected optically by means of a reflecting layer and deflection of a beam.

16. Gyrometer according to claim 15, **characterised in that** the reflecting layer is a constituent-part of an interferometer.

17. Gyrometer according to any one of the preceding claims, **characterised in that** the read-out of the transverse stress of the torsion beam is effected piezoelectrically.

18. Gyrometer according to any one of the preceding claims, **characterised in that** at least elements of the control or read-out electronics system are integrated with the gyrometer on a chip.

19. Gyrometer according to any one of the preceding claims, **characterised in that** it is integrated with at least one other gyrometer on a chip.

20. Gyrometer according to any one of the preceding claims, **characterised in that** it is integrated with at least one acceleration sensor (BS) on a chip.

21. Gyrometer according to any one of the preceding claims, **characterised in that** it is integrated with at least one acceleration sensor (BS) and one gyrometer (DRS) on a chip.

22. Gyrometer according to any one of the preceding claims, **characterised in that** the thickness of the tuning fork suspension is equal to the thickness of the tuning fork structure.

23. Gyrometer according to any one of the preceding claims, **characterised in that** the thickness of the tuning fork suspension is less than the thickness of the tuning fork structure.

24. Gyrometer according to any one of the preceding claims, **characterised in that** it is in the form of a captive sensor in respect of torsion.

## Revendications

1. Gyromètre micromécanique dans lequel des éléments en silicium, en des composés de silicium ou en des composés silicium/verre ou en d'autres matériaux semi-conducteurs sont structurés en relief par des techniques appartenant au domaine de la micromécanique, **caractérisé en ce que**
• le gyromètre a la forme d'un diapason (S) qui est fixé à des pastilles semi-conductrices (OW, UW) par un support de diapason, les branches (Z1, Z2) du diapason (S) étant situées dans des plans parallèles à la surface de la pastille semi-conductrice (OW, UW),
• **en ce que** lesdites branches (Z1, Z2) peuvent être excitées en vibration dans un plan perpendiculaire au plan de la pastille et
• **en ce qu'**il comprend un élément capteur (S), qui mesure la vitesse angulaire d'une rotation du capteur autour d'un axe parallèle au support de diapason.

2. Gyromètre selon la revendication 1, **caractérisé en ce que** l'élément capteur enregistre la torsion du support de diapason.

3. Gyromètre selon la revendication 2, **caractérisé en ce que** l'élément capteur est fabriqué en Si monocristallin.

4. Gyromètre selon la revendication 2, **caractérisé en ce que** l'élément capteur est réalisé en d'autres matériau structurables par des moyens micromécaniques, tels que par exemple du poly-Si, du SiC, du nitrure de silicium, du dioxyde de silicium, du GaAs, du quartz, de l'AIN, du PZT ou d'autres métaux.

5. Gyromètre selon la revendication 3 ou 4, **caractérisé en ce que** le diapason est formé de deux pastilles de silicium, le cas échéant avec des couches minces intégrées, qui sont disposées entre une pastille de base et une pastille de couverture, et **en ce que** les éléments sont liés de telle sorte que le vide puisse être fait dans la cavité entourant le diapason.

6. Gyromètre selon une des revendications précédentes, **caractérisé en ce que** l'excitation d'une branche du diapason a lieu par l'intermédiaire d'une couche mince piézo-électrique, et **en ce que** la mesure de la tension de cisaillement du barreau de torsion est du type piézo-résistive.

7. Gyromètre selon une des revendications précédentes, **caractérisé en ce que** la section transversale du barreau de torsion (T) est conformée en profilé creux

8. Gyromètre selon une des revendications précédentes, **caractérisé en ce que** la section transversale d'au moins une branche (Z1) est un profil en U.

9. Gyromètre selon une des revendications précédentes, **caractérisé en ce qu'**au moins une branche (Z1) est munie d'une masse de réglage.

10. Gyromètre selon une des revendications précédentes, **caractérisé en ce que** l'excitation d'une branche du diapason a lieu par voie thermo-mécanique, par l'intermédiaire de résistances de chauffage implantées ou de résistances de chauffage en couche mince.

11. Gyromètre selon une des revendications précédentes, **caractérisé en ce que** l'excitation d'une branche du diapason a lieu par voie magnétique, par l'intermédiaire d'une couche mince magnétostrictive.

12. Gyromètre selon une des revendications précédentes, **caractérisé en ce que** l'excitation d'une branche du diapason a lieu par voie électrostatique, à l'aide d'électrodes d'excitation.

13. Gyromètre selon une des revendications précédentes, **caractérisé en ce que** l'excitation d'une branche du diapason a lieu par voie électromagnétique, par l'intermédiaire d'une boucle conductrice placée dans un champ magnétique.

14. Gyromètre selon une des revendications précédentes, **caractérisé en ce que** la mesure de la tension de cisaillement du barreau de torsion a lieu par voie électrostatique.

15. Gyromètre selon une des revendications précédentes, **caractérisé en ce que** la mesure de la tension de cisaillement du barreau de torsion a lieu par voie optique, par l'intermédiaire d'une couche réfléchissante et déviation d'un faisceau.

16. Gyromètre selon la revendication 15, **caractérisé en ce que** la couche réfléchissante fait partie d'un interféromètre.

17. Gyromètre selon une des revendications précédentes, **caractérisé en ce que** la mesure de la tension de cisaillement du barreau de torsion a lieu par voie piézoélectrique.

18. Gyromètre selon une des revendications précédentes, **caractérisé en ce qu'**au moins des éléments de l'électronique de commande ou de l'électronique de mesure sont intégrés sur la puce portant le gyromètre.

19. Gyromètre selon une des revendications précédentes, **caractérisé en ce qu'**il est intégré sur une puce avec au moins un gyromètre supplémentaire.

20. Gyromètre selon une des revendications précédentes, **caractérisé en ce qu'**il est intégré sur une puce avec au moins un accéléromètre (BS).

21. Gyromètre selon une des revendications précédentes, **caractérisé en ce qu'**il est intégré sur une puce avec au moins un accéléromètre (BS) et un gyromètre (DRS).

22. Gyromètre selon une des revendications précédentes, **caractérisé en ce que** l'épaisseur du support de diapason est égale à l'épaisseur de la structure de diapason.

23. Gyromètre selon une des revendications précédentes, **caractérisé en ce que** l'épaisseur du support de diapason est inférieure à l'épaisseur de la structure de diapason.

24. Gyromètre selon une des revendications précédentes, **caractérisé en ce que** sur le plan de la torsion, il est conformé en capteur fixe.
